# EUROPEAN PATENT APPLICATION

(11) **EP 4 640 442 A1**
(43) Date of publication of application: **29.10.2025**
(21) Application number: 25172285.6
(22) Date of filing: 24.04.2025
(51) Int. Cl.: B41M 5/00, B41M 7/00, B41J 2/01, B41J 11/00, B23K 26/00, C09D 11/322, C09D 11/54

(54) **METHOD FOR PRODUCING INK JET-RECORDED MATTERS AND APPARATUS FOR PRODUCING INK JET-RECORDED MATTERS**

(30) Priority: 26.04.2024 JP 2024072569; 26.04.2024 JP 2024072570; 17.04.2025 JP 2025068295
(71) Applicant: CANON KABUSHIKI KAISHA, Tokyo 146-8501 (JP)
(72) Inventor: KOBAYASHI, Eri, Tokyo (JP); KANKE, Tsuyoshi, Tokyo (JP); SAITO, Arihiro, Tokyo (JP); YUMOTO, Shinya, Tokyo (JP); TOMINAGA, Akiko, Tokyo (JP); SENBA, Tatsuo, Tokyo (JP)
(74) Representative: WESER & Kollegen Patentanwälte PartmbB

(57) **Abstract**

A method for producing ink jet-recorded matters is provided that enables production of high quality recorded matters with narrowly and uniformly aligned cut widths when cutting a resin film-containing recording medium on which an image is recorded by an ink jet system by a laser die cutting method. The method for producing ink jet-recorded matters has a step of applying an aqueous reaction liquid to a resin film-containing recording medium, a step of applying an aqueous ink by an ink jet system so as to overlap at least a portion of a region of the recording medium to which the reaction liquid is applied, thereby recording an image, and a step of irradiating a region to which the reaction liquid and the aqueous ink are applied with laser light to cut the recording medium. The reaction liquid contains an inorganic metal salt, and the aqueous ink contains titanium oxide.

## Description

### BACKGROUND OF THE INVENTION

### Field of the Invention

The present invention relates to a method for producing ink jet-recorded matters and an apparatus for producing ink jet-recorded matters.

### Description of the Related Art

Ink jet recording apparatuses are apparatuses that eject minute ink droplets from an ejection orifice of a recording head to record images on recording media. In recent years, the use of ink jet recording apparatuses has been considered in the field of signs & displays, such as printing posters and giant advertisements, as well as in the field of label printing and package printing. Ink jet recording apparatuses are required to be able to record images on a wide range of recording media, including not only recording media that absorb aqueous inks but also non-absorbent recording media that hardly absorb aqueous inks. Examples of the non-absorbent recording media that hardly absorb aqueous inks include resin films.

Recorded matters obtained by recording images on recording media are subjected to processing such as cutting and clipping depending on the intended application to become final products. For example, when used as product labels, in recorded matters having a support with an image recorded thereon, an adhesive layer and release paper, the surroundings of the portion to be used as a product label are half-cut. Then, the portion not used as a product label may be removed from the release paper, so-called stripping, to make the final product. As a method for cutting recorded matters, a laser die cutting method has been attracting attention in recent years. The laser die cutting method is a method that uses a high power laser to cut objects. In the case of a mechanical die cutting method, it is necessary to fabricate a die that matches the shape to be cut out. In contrast, the laser die cutting method cuts recording media by direct irradiation with a laser while controlling the cut shape with a computer, thus eliminating the need to fabricate a die. In addition, the laser beam can be controlled very finely, making it easy to cut into complicated shapes.

For example, a method for processing label paper is proposed in which a cut track and a printing pattern are each printed on the label paper along the contour of a die cutting shape using a black ink, and then the paper is half-cut by irradiation with laser light so as to trace the cut track (Japanese Patent Application Laid-Open No. 2014-218040).

### SUMMARY OF THE INVENTION

The present invention is directed to the provision of a method for producing ink jet-recorded matters that enables production of high quality recorded matters with narrowly and uniformly aligned cut widths when cutting a resin film-containing recording medium on which an image has been recorded by an ink jet system by a laser die cutting method, and an apparatus for producing ink jet-recorded matters.

That is, according to one aspect of the present invention, a method for producing ink jet-recorded matters is provided, having a step of applying an aqueous reaction liquid to a resin film-containing recording medium, a step of applying an aqueous ink by an ink jet system so as to overlap at least a portion of a region of the recording medium to which the reaction liquid has been applied, thereby recording an image, and a step of irradiating a region to which the reaction liquid and the aqueous ink have been applied with laser light to cut the recording medium, wherein the reaction liquid contains an inorganic metal salt, and the aqueous ink contains titanium oxide.

In addition, according to another aspect of the present invention, an apparatus for producing ink jet-recorded matters is provided, having a reaction liquid applying device that applies an aqueous reaction liquid to a resin film-containing recording medium, an ink applying device that applies an aqueous ink by an ink jet system so as to overlap at least a portion of a region of the recording medium to which the reaction liquid has been applied, thereby recording an image, and a laser light irradiating device that irradiates a region to which the reaction liquid and the aqueous ink have been applied with laser light to cut the recording medium, wherein the reaction liquid contains an inorganic metal salt, and the aqueous ink contains titanium oxide.

Further features of the present invention will become apparent from the following description of exemplary embodiments with reference to the attached drawings.

### BRIEF DESCRIPTION OF THE DRAWINGS

FIG. 1 is a schematic diagram illustrating an example of an ink jet recording apparatus.
FIG. 2 is a perspective view illustrating an example of a liquid applying device.
FIG. 3 is a cross-sectional perspective view illustrating an example of an ejection element substrate.
FIG. 4 is a schematic diagram illustrating an example of a liquid supply system.
FIG. 5A shows a pattern of an image recorded on a recording medium with the reaction liquid A and the ink A.
FIG. 5B shows a pattern of an image recorded on a recording medium with the reaction liquid B and the ink B.
FIG. 5C is a diagram showing a region to be cut by the laser die cutting device (irradiating position of laser light) in a recording medium on which an image is recorded.
FIG. 6A shows a pattern of an image recorded on a recording medium with the reaction liquid A and the ink A.
FIG. 6B shows a pattern of an image recorded on a recording medium with the reaction liquid B and the ink B.
FIG. 6C is a diagram showing a region to be cut by the laser die cutting device (irradiating position of laser light) in a recording medium on which an image is recorded.

### DESCRIPTION OF THE EMBODIMENTS

Hereinafter, the present invention will be described in further detail with reference to preferred embodiments. In the present invention, if a compound is a salt, the salt is dissociated into ions in the ink, but the expression "salt is contained" is used for convenience. Also, an aqueous ink and a reaction liquid for ink jet may be described simply as an "ink" and a "reaction liquid", respectively. Physical property values are those at normal temperature (25°C), unless otherwise noted. The description "(meth)acrylic acid" and "(meth)acrylate" means "acrylic acid and/or methacrylic acid" and "acrylate and/or methacrylate", respectively.

The present inventors have studied the processing method proposed in Japanese Patent Application Laid-Open No. 2014-218040. Specifically, an image was recorded on a resin-film using a color ink and a white ink, and a cut track (cut region) along the contour of a die cutting shape was also recorded using a black ink. Then, using a laser die cutting apparatus, the film was half-cut along the cut track by irradiation with laser light. As a result, it was found that a variation in cut width was likely to occur and cut width became larger than a spot diameter of the laser light because the cut track to which the black ink was applied was damaged by the laser light. It was also found that, when cutting by the laser die cutting method without recording the cut track, a variation in cut width also occurred and cut width became larger than a spot diameter of the laser light. Furthermore, it was found that there was a difference between the cut width of a printed part to which the white ink had been applied and the cut width of a printed part to which only the color ink had been applied and an unprinted part to which no ink had been applied. In this manner, if there is an expansion or a variation in cut width, the edges formed by cutting will not be neatly aligned, and the appearance of the resulting recorded matters will be spoiled.

Therefore, the present inventors have conducted diligent studies on a method for producing ink jet-recorded matters that enables production of high quality recorded matters with narrowly and uniformly aligned cut widths when cutting a resin-containing recording medium on which an image has been recorded by an ink jet system by a laser die cutting method, and an apparatus for producing ink jet-recorded matters to complete the present invention.

According to the studies by the present inventors, it was found that, when a resin film-containing recording medium on which an image has been recorded is cut by the laser die cutting method, an expansion or a variation is likely to occur between (i) the cut width of a printed part (a white ink application region) to which the white ink has been applied and (ii) the cut width of a printed part (a color ink application region) to which the color ink has been applied and an unprinted part (an ink non-application region) to which no ink has been applied. The present inventors presume the reason why such an expansion or a variation is likely to occur as follows.

The decomposition temperature of titanium oxide used as a coloring agent in white inks is as high as about 2,000°C, and thus, it tends not to be burned out easily when heated by irradiation with laser light, resulting in a narrower cut width. On the other hand, resin films, and organic pigments and carbon black used as coloring agents in color inks and black inks tend to burn and disappear easily when heated by irradiation with laser light, resulting in a wider cut width. Therefore, it is presumed that an expansion or a variation is likely to occur between (i) the cut width of a printed part to which the white ink has been applied and (ii) the cut width of a printed part to which the color ink has been applied and an unprinted part.

The present inventors have conducted studies on a method that can suppress the occurrence of expansion and variation in cut width, even if a resin film-containing recording medium on which an image has been recorded by applying a white ink and a color ink is cut by the laser die cutting method. As a result, they have found the configuration of the present invention, which will be shown below. That is, in the method for producing ink jet-recorded matters of the present invention, an image is recorded by applying an aqueous reaction liquid containing an inorganic metal salt and an aqueous ink containing titanium oxide to a resin film-containing recording medium by an ink jet system. Then, a region to which the reaction liquid and the aqueous ink have been applied is irradiated with laser light to cut the recording medium. By applying in advance the reaction liquid containing an inorganic metal salt and the ink containing titanium oxide to the region to be cut by irradiation with laser light, it is considered that thermal deformation and other problems of the resin film contained in the recording medium caused by laser light irradiation can be suppressed and the occurrence of expansion and variation in cut width can be suppressed. In addition, by allowing the reaction liquid containing an inorganic metal salt to aggregate the ink containing titanium oxide, the amount of titanium oxide present in the region to be cut can be uniformly controlled. This enables high quality recorded matters with narrowly and uniformly aligned cut widths to be obtained. On the other hand, if a color ink containing an organic pigment or a black ink containing carbon black is applied to the region to be cut by irradiation with laser light without applying a white ink containing titanium oxide, the difference in deformation amount caused by laser light irradiation cannot be suppressed, and thus, it is considered to be difficult to suppress the occurrence of expansion and variation in cut width.

### <Method for producing ink jet-recorded matters and apparatus for producing ink jet-recorded matters>

The method for producing ink jet-recorded matters of the present invention has a reaction liquid applying step, an image recording step, and a step of irradiating a region to which a reaction liquid and an aqueous ink have been applied with laser light to cut a recording medium. In the reaction liquid applying step, an aqueous reaction liquid is applied to a resin film-containing recording medium. In the image recording step, an aqueous ink is applied by an ink jet system so as to overlap at least a portion of a region of the recording medium to which the reaction liquid has been applied, thereby recording an image. Then, the reaction liquid contains an inorganic metal salt, and the aqueous ink contains titanium oxide.

Also, the apparatus for producing ink jet-recorded matters of the present invention has a reaction liquid applying device, an ink applying device and a laser light irradiating device. In the reaction liquid applying device, an aqueous reaction liquid is applied to a resin film-containing recording medium. In the ink applying device, an aqueous ink is applied by an ink jet system so as to overlap at least a portion of a region of the recording medium to which the reaction liquid has been applied, thereby recording an image. In the laser light irradiating device, a region to which the reaction liquid and the aqueous ink have been applied is irradiated with laser light to cut the recording medium. Then, the reaction liquid contains an inorganic metal salt, and the aqueous ink contains titanium oxide.

Hereinafter, the details of the method for producing ink jet-recorded matters and apparatus for producing ink jet-recorded matters of the present invention (hereinafter, also referred to as "method for producing recorded matters" and "apparatus for producing recorded matters", respectively) will be described.

### (Ink jet recording apparatus)

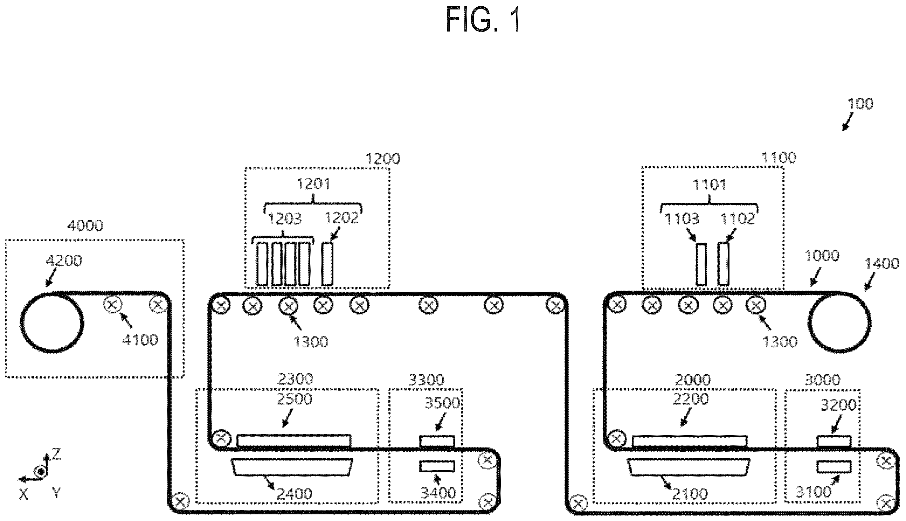

Hereinafter, the details of an ink jet recording apparatus used in the method for producing recorded matters will be described with reference to drawings. FIG. 1 is a schematic diagram illustrating an example of the ink jet recording apparatus. The ink jet recording apparatus that can be used in the method for producing recorded matters of the present invention is an ink jet recording apparatus that uses a reaction liquid containing a reactant that reacts with inks, a first ink and a second ink to record an image on a recording medium wound in the form of a roll. The X direction, Y direction and Z direction represent the width direction (full length direction), depth direction and height direction of the ink jet recording apparatus, respectively. The recording medium is conveyed in the X direction.

An ink jet recording apparatus 100 illustrated in FIG. 1 is configured to have a first recording section 1100, a first heating section 2000, a first cooling section 3000, a second recording section 1200, a second heating section 2300, a second cooling section 3300 and a take-up section 4000. In the first recording section 1100, various liquids including the first ink are applied by a first liquid applying device 1101 to a long recording medium 1000 that is conveyed from a paper feeding device 1400 while being supported by a conveying member 1300. In the first heating section 2000, the recording medium 1000 is placed along a first conveying member 2200 to maintain tension, while the liquids that have been applied to the recording medium 1000 are heated by a first heating device 2100 to evaporate volatile components such as moisture in the liquids to dryness. Thereafter, the recording medium 1000 is cooled by a first cooling member 3100 while being supported by a first conveying member 3200 of the first cooling section 3000.

Next, in the second recording section 1200, various liquids including the second ink are applied by a second liquid applying device 1201 in the same manner as for the case of the various liquids including the first ink. In the second heating section 2300, the recording medium 1000 is placed along a second conveying member 2500 to maintain tension, while the liquids that have been applied to the recording medium 1000 are heated by a second heating device 2400 to evaporate volatile components such as moisture in the liquids to dryness. Next, the recording medium 1000 is cooled by a second cooling member 3400 while being supported by a second conveying member 3500 of the second cooling section 3300. The recording medium 1000 on which an image has been recorded is conveyed while being supported by a supporting member 4100 in the take-up section 4000, and then taken up by a take-up device 4200.

As the recording medium 1000, a resin film-containing recording medium is used. The resin film-containing recording medium may be composed of only the resin film, or may contain materials other than the resin film such as an adhesive paper or release paper. When the recording medium contains materials other than the resin film, the resin film is preferably disposed on the surface of the recording medium. Examples of the resin constituting the resin film include polyvinyl chloride, polyethylene terephthalate, polycarbonate, polystyrene, polyurethane, polyethylene and polypropylene. The resin film may be transparent or opaque. Also, the resin film may contain a colorant. Generally, when recording media containing a transparent resin film that are free from inorganic materials are used, a difference in deformation amount when irradiated with laser light is likely to occur between a printed part to which a white ink has been applied, and a printed part to which a color ink has been applied and an unprinted part, and an expansion or a variation in cut width is particularly noticeable. In contrast, according to the method for producing recorded matters of the present invention, even when using transparent recording media that are free from inorganic materials, high quality recorded matters with narrowly and uniformly aligned cut widths can be produced. The basis weight (g/m²) of the recording medium 1000 is preferably 30 g/m² or more to 500 g/m² or less, and more preferably 50 g/m² or more to 450 g/m² or less. Examples of the recording medium 1000 include rolled paper formed by winding a long recording medium or sheet paper.

### [Recording section]

The recording section is configured to have the first recording section 1100, which applies liquids including the first ink, and the second recording section 1200, which applies liquids including the second ink. The first recording section 1100 has the first liquid applying device 1101. The first liquid applying device 1101 is configured to have a first reaction liquid applying device 1102 and a first ink applying device 1103. The second recording section 1200 has the second liquid applying device 1201. The second liquid applying device 1201 is configured to have a second reaction liquid applying device 1202 and a second ink applying device 1203. The first reaction liquid applying device 1102 and the second reaction liquid applying device 1202 illustrated in FIG. 1 are examples of units using ejection head in an ink jet system. The reaction liquid applying devices may also be configured utilizing a gravure coater, an offset coater, a die coater and a blade coater, among others. The application system of the first reaction liquid applying device 1102 and the second reaction liquid applying device 1202 may be the same or may be different. Application of the reaction liquid by the first reaction liquid applying device 1102 and the second reaction liquid applying device 1202 may be performed either before or after ink application, as long as the reaction liquid can be in contact with the ink on the recording medium 1000. However, in order to record high quality images on a variety of recording media with different liquid absorption characteristics, it is preferable to apply the reaction liquid before application of the ink. As the first ink applying device 1103 and the second ink applying device 1203, ejection heads (recording heads) in the ink jet system are used. Examples of the ejection system of ejection heads as the first liquid applying device 1101 and the second liquid applying device 1201 include a system in which liquid is allowed to undergo film boiling by an electro-thermal converter to form bubbles, thereby ejecting the liquid, and a system in which liquid is ejected by an electro-mechanical converter. The ejection system of the first ink applying device 1103 and the second ink applying device 1203 may be the same or may be different. Also, the first reaction liquid used in combination with the first ink and the second reaction liquid used in combination with the second ink may be the same or may be different. When the recording medium is laminated with a material other than a resin film such as an adhesive layer or release paper, the reaction liquid, the first ink and the second ink are applied to the surface of the recording medium on which the resin film exists.

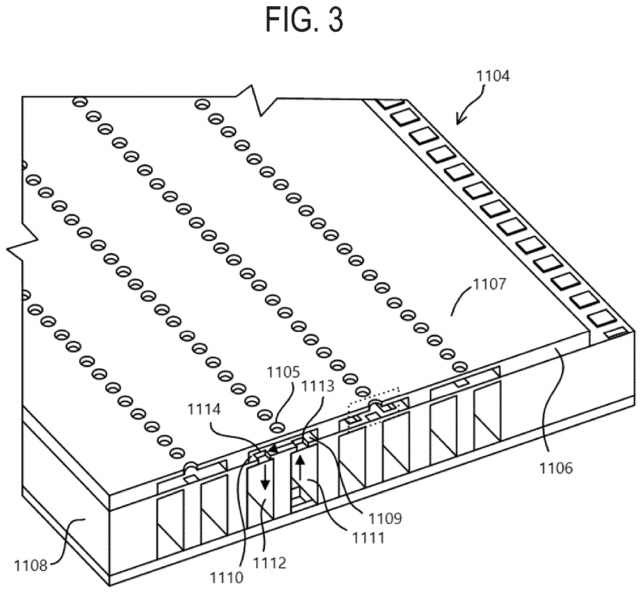

The first liquid applying device 1101 and the second liquid applying device 1201 are line heads extended in the Y direction, and ejection orifices are arranged in the range covering the image recording region of the usable recording medium with the maximum width. The ejection head has an ejection orifice surface 1107 (FIG. 3) on which ejection orifices are formed on its lower side (on the recording medium 1000 side), and the ejection orifice surface faces the recording medium 1000 with a minute distance of a few millimeters.

Hereinafter, description will be given using the case where the first ink (white ink) is ejected from the first ink applying device 1103 and the second ink (non-white ink) is ejected from the second ink applying device 1203 as an example. There may be a plurality of second ink applying devices 1203 provided in order to apply inks of various colors to the recording medium 1000. For example, if using a yellow ink, a magenta ink, a cyan ink and a black ink as the second ink (non-white ink) to record an image of each color, four second ink applying devices 1203 that eject the above four inks are disposed side by side in the X direction. The color tone of the first ink and the second ink is not limited to the above, and the application order of each ink is not limited to the above either. Hereafter, the ink and the reaction liquid are sometimes collectively referred to as "liquid".

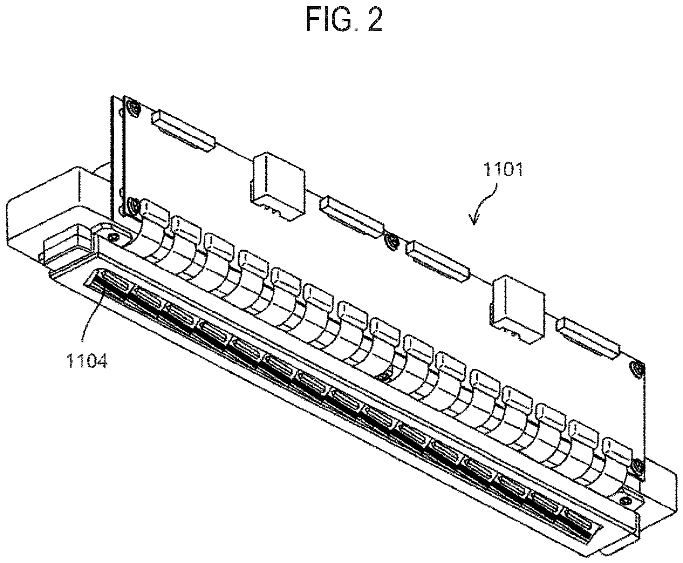

FIG. 2 is a perspective view illustrating an example of the liquid applying device. Since the first liquid applying device 1101 and the second liquid applying device 1201 can have the same configuration, hereinafter, description will be given using the first liquid applying device 1101 as an example. The first liquid applying device 1101 illustrated in FIG. 2 is a line head, with a plurality of ejection element substrates 1104 arranged in a linear fashion, on which ejection orifice arrays are provided. On the ejection element substrates 1104, a plurality of ejection orifice arrays is arranged.

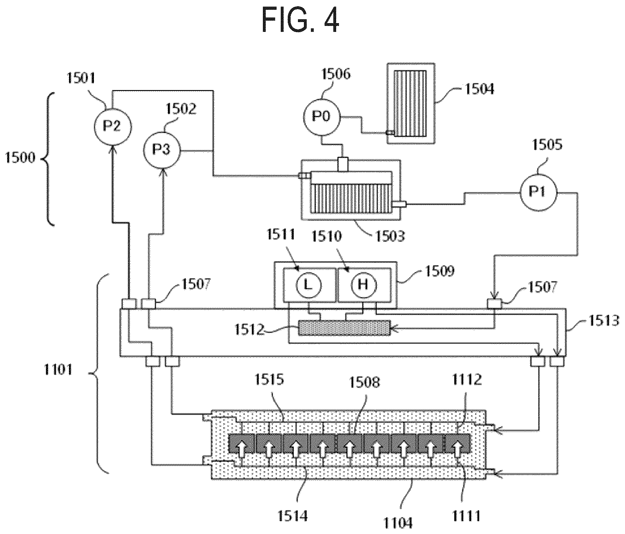

FIG. 3 is a cross-sectional perspective view illustrating an example of the ejection element substrate. The ejection element substrate 1104 illustrated in FIG. 3 has an ejection orifice forming member 1106 on which ejection orifices 1105 are opened, and a substrate 1108 on which ejection elements (not illustrated) are disposed. Lamination of the ejection orifice forming member 1106 and the substrate 1108 forms a first flow path 1109 and a second flow path 1110 through which the liquid flows. The first flow path 1109 is the region from an inlet 1113, where the liquid flows in from an inlet path 1111, to the portion between the ejection orifice 1105 and the ejection element (FIG. 4, liquid chamber 1508). Also, the second flow path 1110 is the region from the portion between the ejection orifice 1105 and the ejection element (FIG. 4, liquid chamber 1508) to an outlet 1114, where the liquid flows out to an outlet path 1112. For example, by providing a pressure difference between the inlet 1113 and the outlet 1114, such as the inlet 1113 with a higher pressure and the outlet 1114 with a lower pressure, the liquid can be made to flow from the higher pressure to the lower pressure (in the direction of the arrows in FIG. 3). The liquid that has passed through the inlet path 1111 and the inlet 1113 enters the first flow path 1109. Then, the liquid through the portion between the ejection orifice 1105 and the ejection element (FIG. 4, liquid chamber 1508) flows through the second flow path 1110 and the outlet 1114 to the outlet path 1112.

### [Supply system]

FIG. 4 is a schematic diagram illustrating an example of a supply system for the liquid such as ink. A supply section 1500 of the first liquid applying device 1101 illustrated in FIG. 4 is configured to have a first circulation pump (high pressure side) 1501, a first circulation pump (low pressure side) 1502, a sub tank 1503, and a second circulation pump 1505. The sub tank 1503, which is connected to a main tank 1504, liquid storage section, has an atmospheric communication port (not illustrated), which allows air bubbles mixed in the liquid to be discharged out of the circulation system. The sub tank 1503 is also connected to a refill pump 1506. The liquid is consumed in the first liquid applying device 1101 by ejecting (discharging) the liquid from the ejection orifices, such as by recording an image or by suction recovery. The refill pump 1506 transfers the liquid corresponding to the amount consumed from the main tank 1504 to the sub tank 1503.

The first circulation pump (high pressure side) 1501 and the first circulation pump (low pressure side) 1502 allow the liquid in the first liquid applying device 1101 that has flowed out of a connection section (inlet section) 1507 to flow into the sub tank 1503. As the first circulation pump (high pressure side) 1501, the first circulation pump (low pressure side) 1502 and the second circulation pump 1505, it is preferable to use positive displacement pumps, which have a quantitative liquid delivery capacity. Examples of such positive displacement pumps include a tube pump, a gear pump, a diaphragm pump and a syringe pump. At the time of driving the ejection element substrate 1104, the liquid is allowed to flow from a common inlet path 1514 to a common outlet path 1515 by the first circulation pump (high pressure side) 1501 and the first circulation pump (low pressure side) 1502.

A negative pressure control unit 1509 has two pressure regulating mechanisms with different control pressures set for each other. A pressure regulating mechanism (high pressure side) 1510 and a pressure regulating mechanism (low pressure side) 1511 are connected to the common inlet path 1514 and the common outlet path 1515 in the ejection element substrate 1104 via a supply unit 1513 provided with a filter 1512 to remove foreign matter from the liquid, respectively. The ejection element substrate 1104 has the common inlet path 1514, the common outlet path 1515 and the inlet path 1111 and the outlet path 1112, which are in communication with the liquid chamber 1508, portion between the ejection orifice 1105 (FIG. 3) and the ejection element (not illustrated). Since the inlet path 1111 and the outlet path 1112 are in communication with the common inlet path 1514 and the common outlet path 1515, respectively, a flow (arrows in FIG. 4) occurs in which a portion of the liquid flows from the common inlet path 1514 through the inside of the liquid chamber 1508 to the common outlet path 1515. The arrows in FIG. 3 indicate the flow of liquid inside the liquid chamber 1508. That is, as illustrated in FIG. 3, the liquid in the first flow path 1109 flows into the second flow path 1110 via the space between the ejection orifice 1105 and the ejection element.

As illustrated in FIG. 4, the pressure regulating mechanism (high pressure side) 1510 is connected to the common inlet path 1514 and also the pressure regulating mechanism (low pressure side) 1511 is connected to the common outlet path 1515, resulting in a pressure difference between the inlet path 1111 and the outlet path 1112. This also generates a pressure difference between the inlet 1113 (FIG. 3), which is in communication with the inlet path 1111, and the outlet 1114 (FIG. 3), which is in communication with the outlet path 1112. When the liquid is made to flow by the pressure difference between the inlet 1113 and the outlet 1114, it is preferable to control the flow speed (mm/s) of the liquid to be 0.1 mm/s or more to 10.0 mm/s or less.

### [Conveyance system]

As illustrated in FIG. 1, the first recording section 1100 is configured to have the first liquid applying device 1101 and the conveying member 1300, which conveys the recording medium 1000. The reaction liquid and the ink are applied by the first liquid applying device 1101 to the desired positions of the recording medium 1000, which is conveyed by the conveying member 1300. The first reaction liquid applying device 1102 and the first ink applying device 1103 receive image signals of a recording data and apply the necessary reaction liquid and ink at each position. The second recording section 1200 is also configured to have the second liquid applying device 1201 and the conveying member 1300, which conveys the recording medium 1000, and applies the necessary reaction liquid and ink to each position in the same manner as the first recording section 1100. FIG. 1 illustrates the conveying member 1300 in the form of a conveying roller, but it may be a spur, a belt, a supporting plate or the like as long as it has the function of conveying the recording medium 1000.

The shape and size of the conveying members 1300 at various locations in the apparatus can be set as appropriate depending on the location at which they are placed. In order to accurately convey the recording medium 1000 in the form of a roll, it is preferable to place the conveying member 1300 such that the recording medium 1000 is in a curved state, thereby keeping the recording medium 1000 in a state where tension is moderately applied.

### [Heating section]

As illustrated in FIG. 1, the first heating section 2000 is configured to have the first heating device 2100 and the first conveying member 2200. Similarly, the second heating section 2300 is configured to have the second heating device 2400 and the second conveying member 2500. In the first heating section 2000 and the second heating section 2300 illustrated in FIG. 1, the recording medium 1000 is conveyed with its recording surface facing downward in the vertical direction. The recording medium 1000 to which the reaction liquid and the ink have been applied to record an image is heated by the first heating device 2100 and the second heating device 2400, thereby evaporating liquid components of the image to dryness, while being conveyed by the first conveying member 2200 and the second conveying member 2500.

The first heating device 2100 and the second heating device 2400 may be of any configuration as long as they can heat the recording medium 1000, and various conventionally known devices such as warm air dryers and heaters can be used. Among these, it is preferable to use a non-contact heater, such as electric wire heater or infrared heater, in terms of safety and energy efficiency. In addition, drying efficiency can be easily improved by using a mechanism that incorporates a fan and sends warm air for injecting heated gas onto the recording medium 1000.

As for the method of heating, the recording medium 1000 may be heated from the side of the surface to which the reaction liquid and the ink have been applied (recording surface (front surface)), may be heated from the back surface side or may be heated from both surfaces. The first conveying member 2200 and the second conveying member 2500 may be provided with a function of heating. It is preferable to set the heating temperature such that liquid components are quickly evaporated and the recording medium 1000 is not over-dried from the viewpoint of suppressing its deformation. The temperature of the drying unit can be set so as to achieve the desired temperature of the recording medium based on conveying speed and ambient temperature.

Specifically, the temperature of the drying unit (such as warm air) is preferably set to 40°C or higher to 100°C or lower, and more preferably set to 60°C or higher to 80°C or lower. Also, when heating the recording medium 1000 by blowing heated gas, the wind speed is preferably set to 1 m/s or more to 100 m/s or less. The temperature of the wind such as warm air can be measured using a K-type thermocouple thermometer. Specific examples of the measuring machine include the trade name "AD-5605H" (manufactured by A&D Company, Limited.).

### [Cooling section]

The first cooling section 3000 is configured to have the first cooling member 3100 and the first conveying member 3200, and the second cooling section 3300 is configured to have the second cooling member 3400 and the second conveying member 3500 (FIG. 1). The first cooling section 3000 and the second cooling section 3300 cool the recording medium 1000, which has passed through the first heating section 2000 and the second heating section 2300 and has become hot. The first cooling member 3100 and the second cooling member 3400 may be of any configuration as long as they can cool the recording medium 1000, and methods such as air cooling and water cooling can be used. Among these, it is preferable to blow unheated gas in terms of safety and energy efficiency. In addition, cooling efficiency can be easily improved by using a mechanism that incorporates a fan and blows air for injecting gas onto the recording medium 1000. The temperature of the cooling unit can be set so as to achieve the desired temperature of an image on the recording medium based on conveying speed and ambient temperature. Specifically, the temperature of the cooling unit (such as blowing air) is preferably set to 20°C or higher to 60°C or lower, and more preferably set to 25°C or higher to 50°C or lower. When cooling by blowing gas, the wind speed is preferably set to 1 m/s or more to 100 m/s or less.

### [Take-up section]

The recording medium 1000 after image recording is stored in the take-up section 4000 (FIG. 1). After recording is performed in the first recording section 1100, the recording medium 1000 passes through the first heating section 2000 and the first cooling section 3000.

Furthermore, after recording is performed in the second recording section 1200, the recording medium 1000 that has passed through the second heating section 2300 and the second cooling section 2200 is conveyed by the conveying member 4100. The recording medium 1100 is finally stored in a state of being taken up in the form of a roll by the take-up device 4200. Two or more take-up devices 4200 may be provided for, for example, storing different recorded matters, respectively.

### [Laser light irradiating section]

For the laser die cutting apparatus as a laser light irradiating section (not illustrated) that irradiates the recording medium with laser light to cut it, a CO₂ laser is usually used. By performing the irradiation with a high power CO₂ laser, the materials in the laser beam path can be decomposed and evaporated, thereby cutting the recording medium. The laser die cutting apparatus may be arranged separately from the ink jet recording apparatus or may be connected in-line with the ink jet recording apparatus (that is, the ink jet recording apparatus may have the laser light irradiating section). If the ink jet recording apparatus has the laser light irradiating section, it is preferable that the laser light irradiating section is placed on the downstream side of the recording section with respect to the conveyance direction of the recording medium. For example, if the inkjet recording apparatus illustrated in FIG. 1 is equipped with the laser light irradiating section, it is preferable that the laser light irradiating section is placed on the downstream side of the second cooling section 3300 and on the upstream side of the take-up device 4200 with respect to the conveyance direction of the recording medium.

The CO₂ laser can be controlled to cut the recording medium by Q switching, which is a laser technology used to obtain intense pulsed light. Specifically, the Q switching frequency, Q release time and cut speed are controlled. It is preferable that the Q switching frequency is set to 5 kHz or more to 20 kHz or less, the Q release time to 10 µs or more to 50 µs or less and the cut speed by laser light irradiation to 500 mm/s or more to 2,000 mm/s or less.

It is preferable that the spot diameter of the laser light is set to 0.1 mm or more to 0.4 mm or less. Also, if a cut region for cutting the recording medium is recorded by applying the reaction liquid and the ink, the line thickness (line width) of the cut region to be recorded is preferably 15% or more larger than the spot diameter of the laser light. By making the line width of the cut region larger in comparison with the spot diameter of the laser light, the narrowness and uniformity in cut width can be further improved. Note that the reaction liquid and the ink may be applied to the entire surface of the recording medium as a base.

Also, in the method for producing recorded matters, it is preferable that a cut region for cutting the recording medium is recorded in the step of recording the image and that the recording medium is cut by irradiating the cut region with the laser light in the step of cutting the recording medium.

By using the laser die cutting apparatus for irradiation with laser light, the recording medium can be cut and the desired part can be detached. Also, label paper including a label section provided with an adhesive layer on a resin film and release paper can be used as the recording medium, and only the label section can be cut and detached by irradiation with laser light, so-called half-cutting. When the half-cutting, the laser light is irradiated toward the surface of the recording medium on the side where the resin film exists. When half-cutting recording media, a difference in deformation amount when irradiated with laser light is likely to occur between a printed part to which a white ink has been applied, and a printed part to which a color ink has been applied and an unprinted part, and an expansion or a variation in cut width is noticeable. When half-cutting recording media, it is necessary to control the laser light so as not to affect the release paper, since only the label section is detached without detaching the release paper. In this case, it is considered that the cut width of a printed part to which a white ink, which is difficult to be decomposed and deformed by the laser light, has been applied is narrower, making the difference from the cut width of a printed part to which a color ink, which is easy to be decomposed and deformed by the laser light, has been applied and an unprinted part larger, resulting in a noticeable expansion or variation in cut width. In contrast, according to the method for producing recorded matters of the present invention, even when half-cutting recording media, high quality recorded matters with narrowly and uniformly aligned cut widths can be produced.

### [Recording method]

It is preferable that the amount of the ink applied to the region to be irradiated with the laser light (the region where the recording medium is cut) is set to 20 ng/600 dpi or more to 100 ng/600 dpi or less. The notation "ng/600 dpi" representing the amount of the ink applied represents the amount of the ink applied to 1 dot at a recording resolution of 600 dpi. By setting the amount of the ink applied to 20 ng/600 dpi or more, titanium oxide included in the region to be cut can suppress thermal deformation of the recording medium due to laser light irradiation and can further suppress the expansion and the variation in cut width. Also, by setting the amount of the ink applied to 100 ng/600 dpi or less, the recording medium can be firmly cut by laser light irradiation. In addition, it is preferable that an image or cut region to which an aqueous ink containing titanium oxide and an aqueous reaction liquid containing an inorganic metal salt are applied is recorded in the whole region irradiated with the laser light. In this way, a recording matter in which the cut edges are neatly aligned in the whole region can be obtained. However, an image or cut region using an aqueous ink containing titanium oxide and an aqueous reaction liquid containing an inorganic metal salt may not be recorded in a part of the region irradiated with the laser light as long as the appearance of the cut recording matter formed by cutting is not substantially impaired.

It is preferable that the amount of the reaction liquid applied is set to 0.05 times or more to 0.3 times or less in mass ratio to the amount of the ink applied. By making the amount of the reaction liquid applied in the above mass ratio to the amount of the ink applied, the reaction liquid can more effectively aggregate the ink and the amount of titanium oxide included in the region to be irradiated with the laser light (the region to be cut) can be controlled to be more uniform. This enables even higher quality ink jet-recorded matters with more narrowly and uniformly aligned cut widths to be produced.

### (Reaction liquid)

The method for producing recorded matters of the present invention has a step of applying an aqueous reaction liquid to a recording medium (reaction liquid applying step). This reaction liquid applying step is preferably carried out before an ink applying step.

### [Reactant]

The reaction liquid reacts with the ink by coming into contact with the ink, to aggregate components (components having anionic groups, such as a resin, a surfactant, or a self-dispersible pigment) in the ink, and contains a reactant. The presence of a reactant can destabilize the state of existence of the components having anionic groups in the ink and promote aggregation of the ink when the ink and the reactant come into contact on the recording medium. Examples of the reactant include a cationic component such as a polyvalent metal ion and a cationic resin, as well as an organic acid. The reactant may be used alone or in combination two or more.

Examples of the polyvalent metal ion that constitutes a polyvalent metal salt include a divalent metal ion such as Ca²⁺, Cu²⁺, Ni²⁺, Mg²⁺, Sr²⁺, Ba²⁺ and Zn²⁺, and a trivalent metal ion such as Fe³⁺, Cr³⁺, Y³⁺ and Al³⁺. In order to make the reaction liquid contain a polyvalent metal ion, a water-soluble polyvalent metal salt (which may be a hydrate) formed by bonding of a polyvalent metal ion and an anion can be used. Examples of the anion include an inorganic anion such as Cl⁻, Br⁻, I⁻, ClO⁻, ClO₂⁻, ClO₃⁻, ClO₄⁻, NO₂⁻, NO₃⁻, SO₄²⁻, CO₃²⁻, HCO₃⁻, PO₄³⁻, HPO₄²⁻ and H₂PO₄⁻; and an organic anion such as HCOO⁻, (COO⁻)₂, COOH(COO⁻), CH₃COO⁻, CH₃CH(OH)COO⁻, C₂H₄(COO⁻)₂, C₆H₅COO⁻, C₆H₄(COO⁻)₂ and CH₃SO₃⁻.

The reaction liquid used in the method for producing recorded matters of the present invention contains an inorganic metal salt. As the inorganic metal salt, it is preferable to use a polyvalent metal salt formed by bonding of the above-described polyvalent metal ion and inorganic anion. The inorganic metal salt is difficult to burn and disappear even when irradiated with laser light and heated to a high temperature. Therefore, by applying in advance the reaction liquid containing an inorganic metal salt to the region to be cut, thermal deformation of the recording medium at the time of laser light irradiation can be suppressed and the narrowness and uniformity in cut width can be improved.

If a polyvalent metal ion is used as the reactant, the content (% by mass) thereof in terms of polyvalent metal salt in the reaction liquid is preferably 1.0% by mass or more to 20.0% by mass or less based on the total mass of the reaction liquid. In the present specification, the "content (% by mass) of the polyvalent metal salt" in the reaction liquid in the case where the polyvalent metal salt is a hydrate means the "content (% by mass) of the anhydrate of polyvalent metal salt", excluding water as hydrate.

The reaction liquid containing an organic acid has a buffering capacity in the acidic region (pH of less than 7.0, preferably pH of 2.0 or more to 5.0 or less), thereby efficiently converting anionic groups of components present in the ink into acid form for aggregation. Examples of the organic acid include a monocarboxylic acid and a salt thereof, such as formic acid, acetic acid, propionic acid, butyric acid, benzoic acid, glycolic acid, lactic acid, salicylic acid, pyrrolecarboxylic acid, furancarboxylic acid, picolinic acid, nicotinic acid, thiophenecarboxylic acid, levulinic acid and coumaric acid; a dicarboxylic acid and a salt or hydrogen salt thereof, such as oxalic acid, malonic acid, succinic acid, glutaric acid, adipic acid, maleic acid, fumaric acid, itaconic acid, sebacic acid, phthalic acid, malic acid, and tartaric acid; a tricarboxylic acid and a salt or hydrogen salt thereof, such as citric acid and trimellitic acid; and a tetracarboxylic acid and a salt or hydrogen salt thereof, such as pyromellitic acid. When an organic acid is used as the reactant, the content (% by mass) of the organic acid in the reaction liquid is preferably 1.0% by mass or more to 50.0% by mass or less based on the total mass of the reaction liquid.

Examples of the cationic resin include a resin having the structure of a primary to tertiary amine, and a resin having the structure of a quaternary ammonium salt. Specific examples thereof include a resin having the structure of vinylamine, allylamine, vinylimidazole, vinylpyridine, dimethylaminoethyl methacrylate, ethyleneimine, guanidine, diallyldimethylammonium chloride, alkylamine-epichlorohydrin condensate and the like. In order to increase solubility in the reaction liquid, the cationic resin can be used in combination with an acidic compound or the cationic resin can be subjected to a quaternization treatment. When a cationic resin is used as the reactant, the content (% by mass) of the cationic resin in the reaction liquid is preferably 0.1% by mass or more to 10.0% by mass or less based on the total mass of the reaction liquid.

### [Aqueous medium]

The reaction liquid is an aqueous reaction liquid that contains at least water as an aqueous medium. Examples of the aqueous medium used for the reaction liquid include those that are the same as the aqueous media that can be contained in the ink, which will be described later. In the aqueous medium used for the reaction liquid, the water-soluble organic solvents that can be contained in the ink, which will be described later, can be contained. The content (% by mass) of the water-soluble organic solvent in the reaction liquid is preferably 1.0% by mass or more to 45.0% by mass or less based on the total mass of the reaction liquid. It is preferable that the water-soluble organic solvent includes the specific water-soluble hydrocarbon compounds, which will be described later. The content (% by mass) of the water-soluble hydrocarbon compound in the reaction liquid is preferably 1.0% by mass or more to 20.0% by mass or less based on the total mass of the reaction liquid. Also, the content (% by mass) of water in the reaction liquid is preferably 50.0% by mass or more to 95.0% by mass or less based on the total mass of the reaction liquid.

### [Other components]

The reaction liquid may contain various other components as necessary. Examples of the other components include those that are the same as the other components that can be contained in the ink, which will be described later.

### [Physical properties of reaction liquid]

The reaction liquid is an aqueous reaction liquid that can be applied to the ink jet system. Accordingly, from the viewpoint of reliability, it is preferable to properly control the physical property values thereof. Specifically, the surface tension of the reaction liquid at 25°C is preferably 20 mN/m or more to 60 mN/m or less. Also, the viscosity of the reaction liquid at 25°C is preferably 1.0 mPa·s or more to 10.0 mPa·s or less. The pH of the reaction liquid at 25°C is preferably 5.0 or more to 9.5 or less, and more preferably 6.0 or more to 9.0 or less.

### (Ink)

The ink used in the method for producing recorded matters of the present invention is an aqueous ink for ink jet that contains titanium oxide. Hereinafter, the components and other materials used in the ink will be described in detail.

### [Coloring material]

The ink preferably contains a coloring material. As the coloring material, a pigment or a dye can be used. The content (% by mass) of the coloring material in the ink is preferably 0.5% by mass or more to 15.0% by mass or less, and more preferably 1.0% by mass or more to 10.0% by mass or less, based on the total mass of the ink.

Specific examples of the pigment include an inorganic pigment such as carbon black and titanium oxide; and an organic pigment such as azo compounds, phthalocyanine, quinacridone, isoindolinone, imidazolone, diketopyrrolopyrrole and dioxazine. The pigment may be used alone or in combination two or more.

The ink contains titanium oxide. The decomposition temperature of titanium oxide is as high as about 2,000°C, and thus, it is difficult to be burned out even when heated by irradiation with laser light. Therefore, by uniformly applying in advance the ink containing titanium oxide to the region to be cut by irradiation with laser light, thermal deformation of the recording medium at the time of laser light irradiation can be suppressed and the narrowness and uniformity in cut width can be further improved.

Examples of a usable pigment include a resin-dispersed pigment containing a resin as a dispersant and a self-dispersible pigment in which a hydrophilic group is bonded to the surface of the pigment particle. Examples of the usable pigment also include a resin-bonded pigment, in which an organic group contained in a resin is chemically bonded to the surface of the pigment particle, microcapsule pigments in which the surface of the pigment particle is covered with a resin and the like. Among these, pigments with different dispersion methods can also be used in combination. In particular, it is preferable to use a resin-dispersed pigment, in which a resin as a dispersant is physically adsorbed on the surface of the pigment particle, rather than resin-bonded pigments or microcapsule pigments.

As the resin dispersant for dispersing the pigment in an aqueous medium, it is preferable to use one that enables dispersing the pigment in the aqueous medium by the action of an anionic group. As the resin dispersant, resins having an anionic group can be used. It is preferable to use resins as described later, especially water-soluble resins. The pigment content (% by mass) in the ink is preferably 0.3 times or more to 10.0 times or less in mass ratio to the content (% by mass) of the resin dispersant.

Examples of a usable self-dispersible pigment include those having an anionic group such as carboxylic acid group, sulfonic acid group and phosphonic acid group bonded to the surface of the pigment particle directly or via another atomic group (-R-). The anionic group may be in either acid form or salt form, and if in salt form, may be in either partially dissociated state or fully dissociated state. If the anionic group is in salt form, examples of cations that serve as counter ions include an alkali metal cation, ammonium and an organic ammonium. Specific examples of the other atomic group (-R-) include a linear or branched alkylene group having 1 to 12 carbon atoms; an arylene group such as phenylene group and naphthylene group; a carbonyl group; an imino group; an amide group; a sulfonyl group; an ester group; and an ether group. Groups in which these groups are combined may also be used.

As the dye, it is preferable to use those having an anionic group. Specific examples of the dye include a dye such as azo compounds, triphenylmethane, (aza)phthalocyanine, xanthene and anthrapyridone. The dye may be used alone or in combination two or more. The coloring material is preferably a pigment, and more preferably a resin-dispersed pigment or a self-dispersible pigment.

### [Titanium oxide]

The content (% by mass) of titanium oxide in the ink is preferably 0.1% by mass or more to 20.0% by mass or less based on the total mass of the ink. In particular, the content (% by mass) of titanium oxide is more preferably 1.0% by mass or more to 20.0% by mass or less, and particularly preferably 1.0% by mass or more to 15.0% by mass or less.

Titanium oxide is a white pigment and exists in three crystal forms: rutile, anatase and brookite. In particular, rutile type titanium oxide is preferable. Examples of the method for industrially producing titanium oxide include the sulfuric acid method and the chlorine method, and the titanium oxide may be obtained by any of these production methods.

The volume-based cumulative 50% particle diameter (hereinafter, also referred to as "average particle diameter") of titanium oxide (titanium oxide particle) is preferably 200 nm or more to 500 nm or less, and more preferably 200 nm or more to 400 nm or less. The volume-based cumulative 50% particle diameter (D₅₀) of titanium oxide is the diameter of particle at which 50% is accumulated from the smaller particle diameter side in the particle diameter cumulative curve, based on the total volume of the particles measured. The D₅₀ of the titanium oxide particle can be measured by, for example, using a particle size distribution measuring apparatus under the following conditions: Set Zero: 30 seconds, number of measurements: 3 times, measurement time: 180 seconds, shape: non-spherical and refractive index: 2.60. As the particle size distribution measuring apparatus, a particle size analyzer based on the dynamic light scattering method can be used. Note that the measurement conditions and other factors are not limited to the above.

Inorganic oxides such as titanium oxide react with water molecules constituting an aqueous medium in the ink to produce hydroxy groups on the surface thereof (hereinafter, also referred to as "surface hydroxy groups"). Therefore, in order to utilize the produced surface hydroxy groups to improve the storage stability of the ink, it is preferable to use titanium oxide that has been subjected to a surface treatment with an inorganic oxide such as alumina or silica. The surface hydroxy groups of titanium oxide have unique properties corresponding to the inorganic compound used in the surface treatment, and depending on the type of inorganic compound, the isoelectric point, which is an index for strength as an acid, varies from each other. Therefore, the surface of titanium oxide particle exhibits properties corresponding to the inorganic compound used in the surface treatment, and the surface charge of titanium oxide is strongly dependent on the pH of the aqueous medium, the type of surface treatment agent and the amount of surface treatment agent used.

It is expected that the surface treatment of titanium oxide suppresses photocatalytic activity and improves dispersibility.

The term "alumina" as used herein is a generic term for oxides of aluminum, such as aluminum oxide. Also the term "silica" as used herein is a generic term for silicon dioxide or substances formed with silicon dioxide. Most of alumina and silica covering titanium oxide are present in the form of silicon dioxide and aluminum oxide.

In the titanium oxide particle, the content (% by mass) of titanium oxide is preferably 90.0% by mass or more to 98.5% by mass or less based on the total mass of the titanium oxide particle. In the titanium oxide particle, the content (% by mass) of alumina is preferably 0.5 times or more to 1.0 times or less in mass ratio to the proportion (% by mass) of silica. Also, in the titanium oxide particle, the proportion (% by mass) of alumina is preferably 0.5% by mass or more to 4.0% by mass or less, and more preferably 1.0% by mass or more to 4.0% by mass or less, based on the total mass of the titanium oxide particle.

In the titanium oxide particle, the content (% by mass) of silica is preferably 1.0% by mass or more to 4.0% by mass or less based on the total mass of the titanium oxide particle.

The total content of alumina and silica in the titanium oxide particle, that is, the amount of alumina and silica coverage, can be measured and calculated by, for example, quantitative analysis of aluminum and silicon by inductively coupled plasma (ICP) emission spectrometry. In this case, it is assumed that all of the atoms (aluminum and silicon) covering the particle surface are oxides, and the amount of aluminum and silicon obtained can be converted to their oxides (alumina and silica) for calculation. In the titanium oxide particle, the content (% by mass) of aluminum element as measured by the ICP emission spectrometry is preferably 0.57 times or more to 1.13 times or less in mass ratio to the content (% by mass) of silicon element. Also, in the titanium oxide particle, the content (% by mass) of alumina is preferably 0.50 times or more to 1.00 times or less in mass ratio to the content (% by mass) of silica.

Examples of the surface treatment method for titanium oxide include a wet treatment method and a dry treatment method. For example, titanium oxide can be dispersed in a liquid medium and then allowed to react with a surface treatment agent such as sodium aluminate or sodium silicate, thereby performing a surface treatment for titanium oxide. Also, the characteristics of titanium oxide can be adjusted by changing the ratio of the surface treatment agent as appropriate. In addition to alumina and silica, titanium oxide may be subjected to a surface treatment with an inorganic oxide such as zinc oxide or zirconia, or an organic material such as polyol, as necessary.

### [Resin]

The ink can contain a resin. By using an ink containing a resin, images with improved abrasion resistance can be recorded. The resin can be added to the ink in order to (i) stabilize the dispersion state of the pigment, that is, as the resin dispersant or an auxiliary thereof.

The resin can also be added to the ink in order to (ii) improve the various characteristics of the image to be recorded.

The content (% by mass) of the resin in the ink is preferably 0.1% by mass or more to 20.0% by mass or less, and more preferably 0.5% by mass or more to 15.0% by mass or less, based on the total mass of the ink.

If the ink contains a resin, the content (% by mass) of titanium oxide in the ink is preferably 0.15 times or more in mass ratio to the content (% by mass) of the resin. By setting the above mass ratio to 0.15 times or more, thermal deformation of the recording medium due to irradiation with laser light can be further suppressed and the narrowness and uniformity in cut width can be further improved.

Examples of the form of the resin include block copolymer, random copolymer, graft copolymer and combinations thereof. Also, the resin may be a water-soluble resin that can be dissolved in an aqueous medium, or may be a resin particle to be dispersed in an aqueous medium. The resin may be used alone or in combination two or more.

### [Compositional features of resin]

Examples of the resin include an acrylic resin, a urethane resin, and an olefinic resin. In particular, an acrylic resin and a urethane resin are preferable, and an acrylic resin formed from a unit derived from (meth)acrylic acid or (meth)acrylate is more preferable.

The acrylic resin is preferably one having a hydrophilic unit and a hydrophobic unit as the constituent units. In particular, a resin is preferable that has a hydrophilic unit derived from (meth)acrylic acid and a hydrophobic unit derived from at least one of a monomer having an aromatic ring and a (meth)acrylic acid ester monomer. Especially, a resin is preferable that has a hydrophilic unit derived from (meth)acrylic acid and a hydrophobic unit derived from at least one monomer of styrene and α-methylstyrene. These resins are likely to interact with the pigment, and thus, can be suitably utilized as a resin dispersant for dispersing the pigment.

The hydrophilic unit is a unit having a hydrophilic group such as an anionic group. The hydrophilic unit can be formed by, for example, polymerizing a hydrophilic monomer having a hydrophilic group. Specific examples of the hydrophilic monomer having a hydrophilic group include an acidic monomer having a carboxylic acid group such as (meth)acrylic acid, itaconic acid, maleic acid, and fumaric acid, and an anionic monomer such as an anhydrate or salt of these acidic monomers. Examples of the cation constituting a salt of an acidic monomer include an ion of lithium, sodium, potassium, ammonium, an organic ammonium, and others. The hydrophobic unit is a unit having no hydrophilic group such as an anionic group. The hydrophobic unit can be formed by, for example, polymerizing a hydrophobic monomer having no hydrophilic group such as an anionic group. Specific examples of the hydrophobic monomer include a monomer having an aromatic ring such as styrene, α-methylstyrene and benzyl (meth)acrylate; and a (meth)acrylic acid ester monomer such as methyl (meth)acrylate, butyl (meth)acrylate and 2-ethylhexyl (meth)acrylate.

The urethane resin can be obtained by, for example, allowing polyisocyanate to react with polyol. In addition, the urethane resin may further react with a chain extender. Examples of the olefin resin include polyethylene and polypropylene.

### [Properties of resin]

In the present specification, the expression "the resin is water-soluble" means that, when the resin is neutralized with an amount of an alkali equivalent to its acid value, it is present in an aqueous medium in a state where the resin does not form a particle whose particle diameter can be measured by the dynamic light scattering method. Whether the resin is water-soluble or not can be determined according to the method shown below. First, a liquid containing the resin that has been neutralized with an alkali (such as sodium hydroxide or potassium hydroxide) equivalent to its acid value is prepared (resin solid content: 10% by mass). Next, the liquid prepared is diluted by 10 times (on a volume basis) with pure water to prepare a sample solution.

Then, if a particle with a particle diameter is not measured in the case where the particle diameter of the resin in the sample solution is measured by the dynamic light scattering method, that resin can be determined to be water-soluble. The measurement conditions at this time can be, for example, Set Zero: 30 seconds, number of measurements: 3 times, and measurement time: 180 seconds. Also, as the particle size distribution measuring apparatus, a particle size analyzer based on the dynamic light scattering method (for example, trade name "UPA-EX150", manufactured by Nikkiso Co., Ltd.) can be used.

Note that the particle size distribution measuring apparatus and measurement conditions to be used are not limited to the above.

The acid value of the water-soluble resin is preferably 100 mgKOH/g or more to 250 mgKOH/g or less. The weight average molecular weight of the water-soluble resin is preferably 3,000 or more to 15,000 or less.

The acid value of the resin constituting the resin particle is preferably 5 mgKOH/g or more to 100 mgKOH/g or less. The weight average molecular weight of the resin constituting the resin particle is preferably 1,000 or more to 3,000,000 or less, and more preferably 100,000 or more to 3,000,000 or less. The volume-based cumulative 50% particle diameter (D₅₀) of the resin particle, as measured by the dynamic light scattering method, is preferably 50 nm or more to 500 nm or less. The volume-based cumulative 50% particle diameter of the resin particle is the diameter of particle at which 50% is accumulated from the smaller particle diameter side in the particle diameter cumulative curve, based on the total volume of the particles measured. The volume-based cumulative 50% particle diameter of the resin particle can be measured using the dynamic light scattering particle size analyzer and measurement conditions described above. The glass transition temperature of the resin particle is preferably 30°C or higher to 120°C or lower, and more preferably 50°C or higher to 100°C or lower. When the glass transition temperature of the resin particle is within the above range, the narrowness and uniformity of the cut width can be further improved. The glass transition temperature (°C) of the resin particle can be measured using a differential scanning calorimeter (DSC). The resin particle does not need to encapsulate a coloring material.

### [Wax particle]

The ink can contain a particle formed of a wax (wax particle).

By using an ink containing a wax particle, images with further improved abrasion resistance can be recorded. The wax as used herein may be a composition in which components other than the wax are blended, or may be the wax itself. The wax particle may be dispersed with a dispersant such as surfactant or resin. The wax may be used alone or in combination two or more. The content (% by mass) of the wax particle in the ink is preferably 0.1% by mass or more to 10.0% by mass or less, and more preferably 1.0% by mass or more to 5.0% by mass or less, based on the total mass of the ink.

Waxes are, in a narrow sense of the term, esters of water insoluble higher monohydric or dihydric alcohols and fatty acids, including animal waxes and vegetable waxes, but not oils and fats. In a broad sense of the term, fats with high melting points, mineral waxes, petroleum waxes, and blended products and modified products of various waxes are included. In the present invention, any of the waxes in a broad sense of the term can be used with no particular restriction. The waxes in a broad sense of the term can be classified into a natural wax, a synthetic wax, a blended product of them (blended wax) and a modified product of them (modified wax).

Examples of the natural wax include an animal wax such as beeswax, whale wax and wool wax (lanolin); a vegetable wax such as Japan wax, carnauba wax, sugarcane wax, palm wax, candelilla wax and rice wax; a mineral wax such as montan wax; and a petroleum wax such as paraffin wax, microcrystalline wax and petrolatum. Examples of the synthetic wax include a hydrocarbon wax such as Fischer-Tropsch wax and polyolefin wax (examples: polyethylene wax and polypropylene wax). The blended wax is a mixture of the various waxes described above. The modified wax is formed by subjecting the various waxes described above to a modification treatment such as oxidation, hydrogenation, alcohol modification, acrylic modification and urethane modification. The wax described above may be used alone or in combination two or more. The wax is preferably at least one selected from the group consisting of microcrystalline wax, Fischer-Tropsch wax, polyolefin wax, paraffin wax and a modified or blended product of them. In particular, the wax is more preferably a blended product of a plurality of types of waxes, and particularly preferably a blended product of a petroleum wax and a synthetic wax.

The wax is preferably solid at normal temperature (25°C). The melting point (°C) of the wax is preferably 40°C or higher to 120°C or lower, and more preferably 50°C or higher to 100°C or lower. The melting point of the wax can be measured in accordance with the test method described in 5.3.1 (Melting point test method) of JIS K 2235:1991 (Petroleum waxes). If the wax is microcrystalline wax, petrolatum and a mixture of a plurality of types of waxes, the test method described in 5.3.2 can be used for a more accurate measurement. The melting point of the wax is easily affected by characteristics such as molecular weight (a larger molecular weight results in a higher melting point), molecular structure (a linear chain results in a higher melting point, while a branched chain results in a lower melting point), crystallinity (higher crystallinity results in a higher melting point) and density (a higher density results in a higher melting point). Therefore, by controlling these characteristics, the wax can be made to have the desired melting point. The melting point of the wax in the ink can be determined by, for example, subjecting the ink to an ultracentrifugation treatment to separate the wax, washing and drying it, and then measuring the melting point in accordance with the test method described above.

### [Aqueous medium]

The ink used in the method for producing recorded matters of the present invention is an aqueous ink that contains at least water as an aqueous medium. The ink can contain water or an aqueous medium, which is a mixed solvent of water and a water-soluble organic solvent. As the water, it is preferable to use deionized water or ion exchanged water. The content (% by mass) of water in the aqueous ink is preferably 50.0% by mass or more to 95.0% by mass or less based on the total mass of the ink. Also, the content (% by mass) of the water-soluble organic solvent in the aqueous ink is preferably 2.0% by mass or more to 40.0% by mass or less based on the total mass of the ink. As the water-soluble organic solvent, any of those that can be used for inks for ink jet, such as alcohols, (poly)alkylene glycols, glycol ethers, nitrogen-containing solvents and sulfur-containing solvents, can be used. The water-soluble organic solvent may be used alone or in combination two or more.

### [Other components]

The ink may contain various other components as necessary. Examples of the other components include a variety of additives, such as a defoamer, a surfactant, a pH adjuster, a viscosity adjuster, a corrosion inhibitor, a preservative, a mold inhibitor, an antioxidant and a reduction inhibitor. However, the ink is preferably free from the reactant to be contained in the reaction liquid.

### [Physical properties of ink]

The ink is an aqueous ink that is applied to the ink jet system. Accordingly, from the viewpoint of reliability, it is preferable to properly control the physical property values thereof. Specifically, the surface tension of the ink at 25°C is preferably 20 mN/m or more to 60 mN/m or less. Also, the viscosity of the ink at 25°C is preferably 1.0 mPa·s or more to 10.0 mPa·s or less. The pH of the ink at 25°C is preferably 7.0 or more to 9.5 or less, and more preferably 8.0 or more to 9.5 or less.

According to one aspect of the present invention, there can be provided a method for producing ink jet-recorded matters that enables production of high quality recorded matters with narrowly and uniformly aligned cut widths when cutting a resin-containing recording medium on which an image has been recorded by an ink jet system by a laser die cutting method, and an apparatus for producing ink jet-recorded matters.

### [Examples]

Hereinafter, the present invention will be described in further detail with reference to Examples and Comparative Examples, but the present invention is not limited in any way by the following Examples, as long as they do not exceed the gist thereof. Unless otherwise noted, the descriptions "parts" and "%" for component amounts are on a mass basis.

### <Preparation of reaction liquids>

The components shown below were mixed, thoroughly stirred, and then subjected to pressure filtration through a cellulose acetate filter (manufactured by Advantec) with a pore size of 3.0 µm, thereby preparing the respective reaction liquids. As a surfactant, an acetylene glycol-based nonionic surfactant (trade name "Acetylenol E100", manufactured by Kawaken Fine Chemicals Co., Ltd.) was used. "Cation polymer (PQ40U05NV)" is the trade name of an aqueous solution (content of cationic resin; 40%) of a diallyldimethylammonium chloride polymer having the structure of a quaternary ammonium salt, manufactured by KATPOL CHEMIE GmbH.

### (Reaction liquid 1)

· Magnesium sulfate heptahydrate: 8.0%
. 1,2-Butanediol: 3.0%
· Surfactant: 0.1%
· Ion exchanged water: 88.9%

### (Reaction liquid 2)

· Calcium chloride hexahydrate: 7.8%
· 1,2-Butanediol: 3.0%
· Surfactant: 0.1%
· Ion exchanged water: 89.1%

### (Reaction liquid 3)

· Magnesium chloride hexahydrate: 8.5%
· 1,2-Butanediol: 3.0%
· Surfactant: 0.1%
· Ion exchanged water: 88.4%

### (Reaction liquid 4)

· Aluminum sulfate hexadecahydrate: 7.4%
· 1,2-Butanediol: 3.0%
· Surfactant: 0.1%
· Ion exchanged water: 89.5%

### (Reaction liquid 5)

· Cation polymer (PQ40U05NV): 10.0%
· 1,2-Butanediol: 3.0%
· Surfactant: 0.1%
· Ion exchanged water: 86.9%

### (Reaction liquid 6)

· Malonic acid: 4.0%
· 1,2-Butanediol: 3.0%
· Surfactant: 0.1%
· Ion exchanged water: 92.9%

### <Preparation of pigment dispersion liquids>

### (Pigment dispersion liquid 1)

40.0 parts of rutile type titanium oxide, 2.0 parts of 3-(methoxy(polyoxyethylene)9-12)propyltrimethoxysilane, and ion exchanged water in such an amount that the total of the components was 100.0 parts were mixed. As titanium oxide, the trade name "TITANIX JR-403" (manufactured by Tayca Co., Ltd., surface treatment: alumina and silica) was used. After performing preliminary dispersion using a homogenizer, a paint shaker (0.5 mm zirconia beads) was used to perform a dispersion treatment at 25°C for 12 hours. After filtering out the zirconia beads, an appropriate amount of ion exchanged water was added as necessary to prepare a pigment dispersion liquid 1 with a content of titanium oxide of 40.0%.

### (Pigment dispersion liquid 2)

A styrene-ethyl acrylate-acrylic acid copolymer (resin 1) with an acid value of 200 mgKOH/g and a weight average molecular weight of 8,000 was prepared. While neutralizing 20.0 parts of the resin 1 with potassium hydroxide equimolar to its acid value, an appropriate amount of pure water was added to prepare an aqueous solution of the resin 1 with a content of the resin (solid content) of 20.0%. 40.0 parts of rutile type titanium oxide (trade name "TITANIX JR-600A", manufactured by Tayca Co., Ltd., surface treatment: alumina), 10.0 parts of the aqueous solution of the resin 1, and 50.0 parts of pure water were mixed, and preliminary dispersion was performed using a homogenizer. Thereafter, a paint shaker (0.5 mm zirconia beads) was used to perform a dispersion treatment (main dispersion) at 25°C for 12 hours. After filtering out the zirconia beads, an appropriate amount of ion exchanged water was added as necessary to prepare a pigment dispersion liquid 2 with a content of titanium oxide of 40.0% and a content of the resin dispersant (resin 1) of 2.0%.

### (Pigment dispersion liquid 3)

A styrene-ethyl acrylate-acrylic acid copolymer (resin 2) with an acid value of 150 mgKOH/g and a weight average molecular weight of 8,000 was prepared. While neutralizing 20.0 parts of the resin 2 with potassium hydroxide equimolar to its acid value, an appropriate amount of pure water was added to prepare an aqueous solution of the resin 2 with a content of the resin (solid content) of 20.0%. 10.0 parts of a pigment (carbon black), 10.0 parts of the aqueous solution of the resin 2, and 80.0 parts of pure water were mixed to obtain a mixture. The obtained mixture and 200 parts of zirconia beads with a diameter of 0.3 mm were placed in a batch type vertical sand mill (manufactured by Aimex Co., Ltd.), and subjected to a dispersion treatment for 5 hours under water cooling. After removing coarse particles by centrifugation, pressure filtration through a cellulose acetate filter (manufactured by Advantec) with a pore size of 3.0 µm was performed to prepare a pigment dispersion liquid 3 with a content of the pigment of 10.0% and a content of the resin dispersant (resin 2) of 2.0%.

### <Preparation of resin particles>

### (Aqueous Dispersion Liquid of Resin Particle 1)

After adding 100.0 parts of ion exchanged water to a flask equipped with a stirrer, a reflux condenser, a thermometer, and a nitrogen gas introduction tube, nitrogen gas was introduced into the flask, and the ion exchanged water was raised to 80°C under stirring. In addition, 100.0 parts of ion exchanged water, 1.0 parts of sodium lauryl sulfate (emulsifier), 18.0 parts of 2-ethylhexyl acrylate, 31.0 parts of methyl methacrylate, 48.0 parts of styrene, and 3.0 parts of acrylic acid were mixed to obtain a monomer emulsion. The monomer emulsion and 10.0 parts of a 5.0% aqueous solution of potassium persulfate were added dropwise to the flask described above over 3 hours. After aging for 2 hours, the solid content was adjusted with an appropriate amount of ion exchanged water, and an aqueous dispersion liquid containing resin particle 1 (resin particle (solid content): 25.0%) was obtained. The glass transition temperature (Tg) of resin particle 1 in the aqueous dispersion liquid thus obtained was 70°C, and the volume average particle diameter (D₅₀) was 86 nm.

### (Aqueous Dispersion Liquid of Resin Particle 2)

An aqueous dispersion liquid of resin particle 2 (resin particle (solid content): 25.0%) was obtained in the same manner as the aqueous dispersion liquid of resin particle 1 except that a monomer emulsion prepared by mixing 100.0 parts of water, 1.0 parts of sodium lauryl sulfate (emulsifier), 34.0 parts of 2-ethylhexyl acrylate, 34.0 parts of methyl methacrylate, 25.0 parts of styrene, and 3.0 parts of acrylic acid was used. The glass transition temperature (Tg) of resin particle 2 in the aqueous dispersion liquid thus obtained was 31°C, and the volume average particle diameter (D₅₀) was 90 nm.

### (Aqueous Dispersion Liquid of Resin Particle 3)

An aqueous dispersion liquid of resin particle 3 (resin particle (solid content): 25.0%) was obtained in the same manner as the aqueous dispersion liquid of resin particle 1 except that a monomer emulsion prepared by mixing 100.0 parts of water, 1.0 parts of sodium lauryl sulfate (emulsifier), 35.0 parts of 2-ethylhexyl acrylate, 32.0 parts of methyl methacrylate, 30.0 parts of n-butyl acrylate, and 3.0 parts of acrylic acid was used. The glass transition temperature (Tg) of resin particle 3 in the aqueous dispersion liquid thus obtained was -6°C, and the volume average particle diameter (D₅₀) was 88 nm.

### (Measurement of the glass transition temperature Tg of resin particles)

The glass transition temperature of resin particles was measured according to the following procedure. First, an aqueous dispersion liquid of resin particles was dried and solidified at 25°C to prepare a measurement sample. Then, thermal analysis was performed using a differential scanning calorimeter (trade name "DSC-Q1000," manufactured by TA Instruments Japan) according to the temperature program described below, and a warming curve was prepared. On the prepared warming curve (horizontal axis: Temperature, vertical axis: calorific value), the temperature at the intersection of a straight line extending to the high-temperature side through 2 points in the curve on the low-temperature side and a tangent drawn at the point at which the gradient of the stepwise change portion in the curve is maximized was defined as the glass transition temperature Tg (°C) of the resin particles.

### <Preparation of inks>

The components (unit: parts) shown in Table 1 were mixed, thoroughly stirred, and then subjected to pressure filtration through a cellulose acetate filter (manufactured by Advantec) with a pore size of 3.0 µm, thereby preparing the respective inks. In Table 1, "Acetylenol E100" is the trade name of a surfactant manufactured by Kawaken Fine Chemicals Co., Ltd. Note that the inks 4 to 7 were prepared by mixing and stirring the components (unit: parts) shown in Table 1, and then evaporating moisture such that the total amount was 100 parts.

**Table 1: Compositional features of ink**

| | Ink | | | | | | |
|---|---|---|---|---|---|---|---|
| | 1 | 2 | 3 | 4 | 5 | 6 | 7 |
| Pigment dispersion liquid 1 | 25.0 | | | 10.0 | 10.0 | 10.0 | 10.0 |
| Pigment dispersion liquid 2 | | | 25.0 | | | | |
| Pigment dispersion liquid 3 | | 25.0 | | | | | |
| Aqueous dispersion liquid of resin particle 1 | 40.0 | 40.0 | 40.0 | 100.0 | 120.0 | | |
| Aqueous dispersion liquid of resin particle 2 | | | | | | 100.0 | |
| Aqueous dispersion liquid of resin particle 3 | | | | | | | 100.0 |
| 1,2-Butanediol | 10.0 | 10.0 | 10.0 | 10.0 | 10.0 | 10.0 | 10.0 |
| Acetylenol E100 | 0.5 | 0.5 | 0.5 | 0.5 | 0.5 | 0.5 | 0.5 |
| Ion exchanged water | 24.5 | 24.5 | 24.5 | - | - | - | - |

### <Preparation of recording media>

The recording media 1 to 3 shown below were prepared. The recording media 1 and 2 are label paper in which an adhesive layer and release paper are provided on the back surface of the surface substrates (the resin film) shown below.
· Recording medium 1: transparent polyester film (trade name "PET50(A) PAT1 8LK", manufactured by Lintec Corporation)
· Recording medium 2: white polyester film (trade name "PETWH50(A) PAT1 8LK2", manufactured by Lintec Corporation)
· Recording medium 3: transparent polyester film (trade name "Lumirror T60", manufactured by Toray Industries, Inc.)

### <Evaluation>

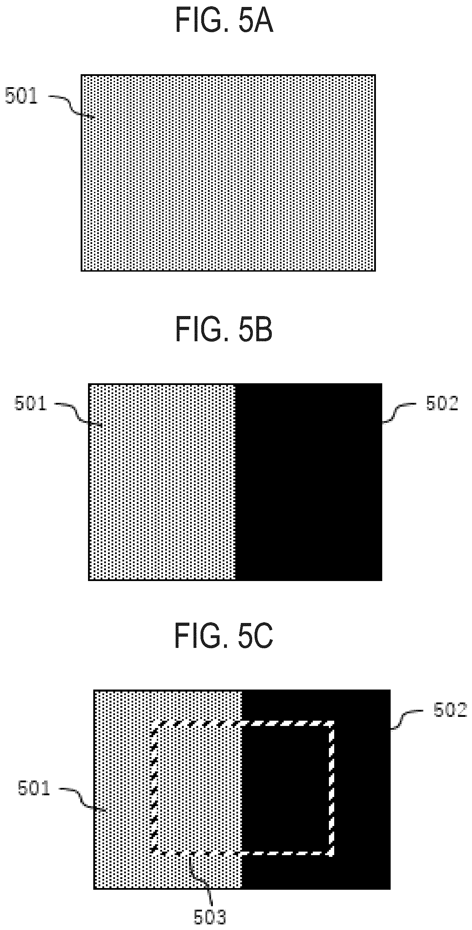

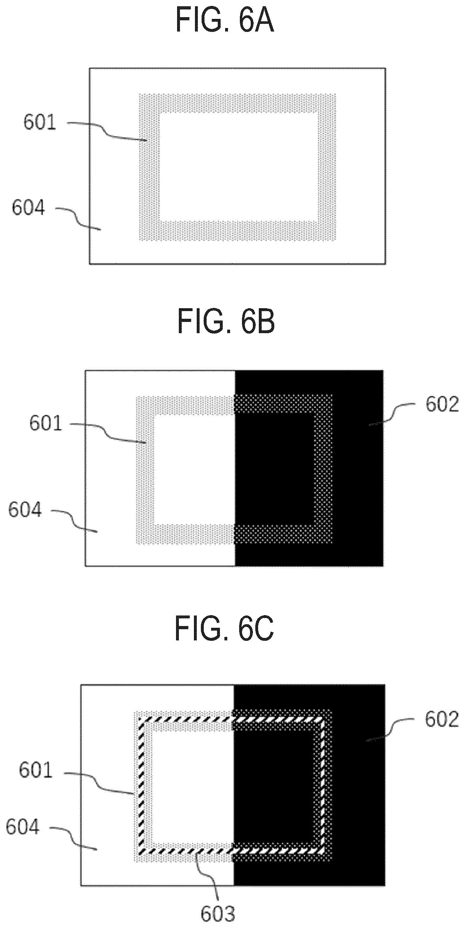

A reaction liquid A and an ink A were filled into the first reaction liquid applying device 1102 and the first ink applying device 1103, respectively, of the ink jet recording apparatus 100 with the configuration illustrated in FIG. 1. Also, a reaction liquid B and an ink B were filled into the second reaction liquid applying device 1202 and the second ink applying device 1203, respectively. Under the recording conditions (amount applied) and evaluation conditions shown in Tables 2 and 4, the reaction liquid A, the ink A, the reaction liquid B and the ink B were applied to the recording medium in this order, and images illustrated in FIGS. 5A and 5B, or FIGS. 6A and 6B, were recorded. Then, with respect to the recorded image, the recording medium on which the image is recorded is cut at the laser light irradiation position shown in FIG. 5C or FIG. 6C. Hereinafter, the recording method of the image and the cutting method of the recording medium will be described in detail with reference to FIGS. 5A, 5B, 5C, 6A, 6B and 6C.

In FIGS. 5A, 5B and 5C, reference numerical 501 shows an image recorded by applying the reaction liquid A and the ink A. As shown in FIG. 5A, the image 501 is recorded over the entire surface of the recording medium. In FIGS. 5B and 5C, reference numerical 502 shows an image recorded by applying the reaction liquid B and the ink B. As shown in FIG. 5B, the image 502 is recorded on the right half of the recording medium on which the image 501 is recorded so as to partially overlap the image 501. In FIG. 5C, reference numerical 503 shows an irradiation position (irradiation region) of the laser light irradiated to cut the recording medium on which the image is recorded. As shown in FIG. 5C, at least the image 501 recorded by applying the reaction liquid A and the ink A exists at the irradiation position 503 of the laser light.

In FIGS. 6A, 6B and 6C, reference numerical 601 shows an image recorded by applying the reaction liquid A and the ink A. As shown in FIG. 6A, the image 601 is recorded on a recording medium in the form of a rectangular outline. In FIGS. 6B and 6C, reference numerical 602 shows an image recorded by applying the reaction liquid B and the ink B. As shown in FIG. 6B, the image 602 is recorded on the right half of the recording medium on which the image 601 is recorded so as to partially overlap the image 601. In FIG. 6B, the image 601 is displayed so that the image 602 overlaps with the image, but in the actual image, the image 601 is not visible because the image 602 is recorded on the image 601 in the right half of the recording medium. In FIG. 6C, reference numerical 603 shows an irradiation position (irradiation region) of the laser light irradiated to cut the recording medium on which the image is recorded. As shown in FIG. 6C, at least the image 601 recorded by applying the reaction liquid A and the ink A exists at the irradiation position 603 of the laser light. The image 601 corresponds to a cut region. In FIGS. 6A, 6B and 6C, reference numerical 604 indicates an image margin region where the images 601 and 602 are not recorded.

In Table 2, under Recording condition 16, the reaction liquid A and the ink A were not applied to the region of image 601 in FIG. 6A. Under Recording condition 17, the reaction liquid B and the ink B were applied to the region of image 601 in FIG. 6A instead of the reaction liquid A and the ink A. Under Reaction condition 18, only the reaction liquid A was applied to the region of image 601 in FIG. 6A, and the ink A was not applied. Under Reaction condition 19, only the ink A was applied to the region of image 601 in FIG. 6A, and the reaction liquid A was not applied.

In the ink jet recording apparatus 100 used in the present Examples, an image recorded under the condition where one ink droplet of 3.0 ng is applied to a unit region of 1/1,200 inches × 1/1,200 inches is defined as having a recording duty of 100%. The conveyance speed of the recording medium was set to 0.3 m/s. The drying temperature in the heating sections 2000 and 2300 was set to 90°C and the wind speed was set to 10 m/s. Also, the temperature in the cooling sections 3000 and 3300 was set to 30°C. In the present invention, "AAA", "AA", "A" and "B" were considered acceptable levels, and "C" was considered an unacceptable level, based on the evaluation criteria for each item shown below. Table 4 shows the evaluation results.

### (Uniformity in cut width by laser light)

A recording medium on which an image was recorded under the recording conditions shown in table 2 was irradiated with a laser light at irradiation positions 503 and 603 of the laser light by a laser light die cutting device to obtain a cut recording matter. The cutting conditions for the laser die cutting apparatus are shown in Table 3. As the laser light for the laser die cutting apparatus, a CO₂ laser with a spot diameter of 0.2 mm was used. The average value of the cut width by the laser light of the recording matter obtained by cutting at the irradiation positions in FIGS. 5C and 6C of the laser light and the difference between them (difference in cut width) were calculated respectively, and the uniformity of the laser cut width was evaluated according to the following evaluation criteria. In Table 3, "Half-cut" means that when the recording medium is a label paper, cutting was performed such that only the surface substrate (label section) of the label paper was detached without detaching the release paper, and means that when the recording medium is not a label paper, cutting was performed such that the entire of the recording medium was detached.
AAA: The difference in cut width was less than 20 µm.
AA: The difference in cut width was 20 µm or more to less than 40 µm.
A: The difference in cut width was 40 µm or more to less than 60 µm.
B: The difference in cut width was 60 µm or more to less than 80 µm.
C: The difference in cut width was 80 µm or more.

### (Narrowness of cut width by laser light)

The narrowness of cut width of the recording matter obtained in the evaluation of the uniformity of the laser cut width described above was measured, and the narrowness of the cut width by the laser light was evaluated according to the following evaluation criteria.
A: The ratio of the cut width to the spot diameter (0.2 mm) of the laser light was less than 180%.
B: The ratio of the cut width to the spot diameter (0.2 mm) of the laser light was 180% or more to less than 240%.
C: The ratio of the cut width to the spot diameter (0.2 mm) of the laser light was 240% or more.

**Table 2: Recording conditions**

| Recording conditions | Recording medium | Amount applied | | | | | | | | Image |
|---|---|---|---|---|---|---|---|---|---|---|
| | | Reaction liquid A | | Ink A | | Reaction liquid B | | Ink B | | |
| | | Duty (%) | ng/ 600 dpi | Duty (%) | ng/ 600 dpi | Duty (%) | ng/ 600 dpi | Duty (%) | ng/ 600 dpi | |
| 1 | 1 | 33.3 | 4.0 | 333.3 | 40.0 | 8.3 | 1.0 | 83.3 | 10.0 | FIGS. 5A and 5B |
| 2 | 1 | 33.3 | 4.0 | 333.3 | 40.0 | 8.3 | 1.0 | 83.3 | 10.0 | FIGS. 6A and 6B |
| 3 | 1 | 66.7 | 8.0 | 833.3 | 100.0 | 8.3 | 1.0 | 83.3 | 10.0 | FIGS. 5A and 5B |
| 4 | 1 | 14.2 | 1.7 | 141.7 | 17.0 | 8.3 | 1.0 | 83.3 | 10.0 | FIGS. 5A and 5B |
| 5 | 1 | 16.7 | 2.0 | 166.7 | 20.0 | 8.3 | 1.0 | 83.3 | 10.0 | FIGS. 5A and 5B |
| 6 | 1 | 83.3 | 10.0 | 833.3 | 100.0 | 8.3 | 1.0 | 83.3 | 10.0 | FIGS. 5A and 5B |
| 7 | 1 | 87.5 | 10.5 | 875.0 | 105.0 | 8.3 | 1.0 | 83.3 | 10.0 | FIGS. 5A and 5B |
| 8 | 1 | 3.3 | 9.4 | 333.3 | 40.0 | 8.3 | 1.0 | 83.3 | 10.0 | FIGS. 5A and 5B |
| 9 | 1 | 10.0 | 1.2 | 333.3 | 40.0 | 8.3 | 1.0 | 83.3 | 10.0 | FIGS. 5A and 5B |
| 10 | 1 | 16.7 | 2.0 | 333.3 | 40.0 | 8.3 | 1.0 | 83.3 | 10.0 | FIGS. 5A and 5B |
| 11 | 1 | 100.0 | 12.0 | 333.3 | 40.0 | 8.3 | 1.0 | 83.3 | 10.0 | FIGS. 5A and 5B |
| 12 | 1 | 116.7 | 14.0 | 333.3 | 40.0 | 8.3 | 1.0 | 83.3 | 10.0 | FIGS. 5A and 5B |
| 13 | 2 | 10.0 | 1.2 | 333.3 | 40.0 | 8.3 | 1.0 | 83.3 | 10.0 | FIGS. 5A and 5B |
| 14 | 3 | 10.0 | 1.2 | 333.3 | 40.0 | 8.3 | 1.0 | 83.3 | 10.0 | FIGS. 5A and 5B |
| 15 | 1 | 1.7 | 0.2 | 41.7 | 5.0 | 8.3 | 1.0 | 83.3 | 10.0 | FIGS. 5A and 5B |
| 16 | 1 | 0.0 | 0.0 | 0.0 | 0.0 | 8.3 | 1.0 | 83.3 | 10.0 | *1 |
| 17 | 1 | 0.0 | 0.0 | 0.0 | 0.0 | 8.3 | 1.0 | 83.3 | 10.0 | *2 |
| 18 | 1 | 33.3 | 4.0 | 0.0 | 0.0 | 8.3 | 1.0 | 83.3 | 10.0 | *3 |
| 19 | 1 | 0.0 | 0.0 | 333.3 | 40.0 | 8.3 | 1.0 | 83.3 | 10.0 | *4 |

| | | | | | | | | | | |
|---|---|---|---|---|---|---|---|---|---|---|
| *1: The reaction liquid A and the ink A were not applied to the region of the image 601 in FIG. 6A. *2: The reaction liquid B and the ink B were applied to the region of the image 601 in FIG. 6A. *3: Only the reaction liquid A was applied to the region of the image 601 in FIG. 6A and the ink A was not applied. *4: Only the ink A was applied to the region of the image 601 in FIG. 6A and the reaction liquid A was not applied. | | | | | | | | | | |

**Table 3: Cutting conditions for laser die cutting apparatus**

| | Cutting conditions | |
|---|---|---|
| | 1 | 2 |
| Q switching frequency (kHz) | 15 | 15 |
| Q release time (µs) | 20 | 20 |
| Cut speed (mm/s) | 1,200 | 600 |
| Cut range | Half-cut | Cut |

**Table 4: Evaluation conditions and evaluation results**

| | | Evaluation conditions | | | | | | Evaluation results | |
|---|---|---|---|---|---|---|---|---|---|
| | | Reaction liquid A | Reaction liquid B | Ink A | Ink B | Recording conditions | Cutting conditions | Uniformity in cut width | Narrowness of cut width |
| | 1 | 1 | 1 | 1 | 2 | 1 | 1 | AAA | A |
| | 2 | 1 | 1 | 1 | 2 | 2 | 1 | AAA | A |
| | 3 | 1 | 1 | 3 | 2 | 1 | 1 | AAA | A |
| | 4 | 2 | 2 | 1 | 2 | 1 | 1 | AAA | A |
| | 5 | 3 | 3 | 1 | 2 | 1 | 1 | AAA | A |
| | 6 | 4 | 4 | 1 | 2 | 1 | 1 | AAA | A |
| | 7 | 1 | 1 | 4 | 2 | 3 | 1 | AAA | A |
| | 8 | 1 | 1 | 5 | 2 | 3 | 1 | AA | A |
| | 9 | 1 | 1 | 6 | 2 | 3 | 1 | AAA | A |
| | 10 | 1 | 1 | 7 | 2 | 3 | 1 | AA | B |
| | 11 | 1 | 1 | 1 | 2 | 4 | 1 | AA | B |
| | 12 | 1 | 1 | 1 | 2 | 5 | 1 | AAA | A |
| Example | 13 | 1 | 1 | 1 | 2 | 6 | 1 | AAA | A |
| | 14 | 1 | 1 | 1 | 2 | 7 | 1 | AA | A |
| | 15 | 1 | 1 | 1 | 2 | 8 | 1 | A | B |
| | 16 | 1 | 1 | 1 | 2 | 9 | 1 | AA | B |
| | 17 | 1 | 1 | 1 | 2 | 10 | 1 | AAA | A |
| | 18 | 1 | 1 | 1 | 2 | 11 | 1 | AAA | A |
| | 19 | 1 | 1 | 1 | 2 | 12 | 1 | AA | A |
| | 20 | 1 | 1 | 1 | 2 | 13 | 1 | AAA | A |
| | 21 | 1 | 1 | 1 | 2 | 14 | 2 | AAA | A |
| | 22 | 1 | 1 | 5 | 2 | 15 | 1 | B | B |
| Comparative Example | 1 | - | 1 | - | 2 | 16 | 1 | AAA | C |
| | 2 | - | 1 | - | 2 | 17 | 1 | AAA | C |
| | 3 | 1 | 1 | - | 2 | 18 | 1 | AAA | C |
| | 4 | - | 1 | 1 | 2 | 19 | 1 | C | B |
| | 5 | 5 | 5 | 5 | 2 | 15 | 1 | C | C |
| | 6 | 6 | 6 | 5 | 2 | 15 | 1 | C | C |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A method for producing ink jet-recorded matters, comprising the steps of:
applying an aqueous reaction liquid to a resin film-containing recording medium;
applying an aqueous ink by an ink jet system so as to overlap at least a portion of a region of the recording medium to which the reaction liquid has been applied, thereby recording an image; and
irradiating a region to which the reaction liquid and the aqueous ink have been applied with laser light to cut the recording medium,
wherein the reaction liquid contains an inorganic metal salt, and
the aqueous ink contains titanium oxide.

2. The method for producing ink jet-recorded matters according to claim 1,
wherein the aqueous ink further contains a resin, and
in the aqueous ink, a content (% by mass) of the titanium oxide is 0.15 times or more in mass ratio to a content (% by mass) of the resin.

3. The method for producing ink jet-recorded matters according to claim 1 or 2, wherein an amount of the aqueous ink applied to the region to be irradiated with the laser light is 20 ng/600 dpi or more to 100 ng/600 dpi or less.

4. The method for producing ink jet-recorded matters according to any one of claims 1 to 3, wherein an amount of the reaction liquid applied is 0.05 times or more to 0.3 times or less in mass ratio to an amount of the aqueous ink applied.

5. The method for producing ink jet-recorded matters according to any one of claims 1 to 4, wherein the recording medium is free from inorganic materials.

6. The method for producing ink jet-recorded matters according to any one of claims 1 to 5, wherein the recording medium is half-cut by irradiation with the laser light.

7. The method for producing ink jet-recorded matters according to any one of claims 1 to 6,
wherein a cut region for cutting the recording medium is recorded in recording the image, and
the recording medium is cut by irradiating the cut region with the laser light in the step of cutting the recording medium.

8. An apparatus for producing ink jet-recorded matters, comprising:
a reaction liquid applying device that applies an aqueous reaction liquid to a resin film-containing recording medium;
an ink applying device that applies an aqueous ink by an ink jet system so as to overlap at least a portion of a region of the recording medium to which the reaction liquid has been applied, thereby recording an image; and
a laser light irradiating device that irradiates a region to which the reaction liquid and the aqueous ink have been applied with laser light to cut the recording medium,
wherein the reaction liquid contains an inorganic metal salt, and
the aqueous ink contains titanium oxide.
